# FASCICULE DE BREVET EUROPEEN

(11) **EP 1 173 920 B1**
(45) Date de publication et mention de la délivrance du brevet: **30.07.2008**
(21) Numéro de dépôt: 00920957.8
(22) Date de dépôt: 28.04.2000
(51) Int. Cl.: H02K 41/03, E05F 15/18

(54) **MOTEUR LINEAIRE A COMMUTATION DE FLUX**
LINEARMOTOR MIT KOMMUTIERUNG DES MAGNETFLUSSES
FLUX SWITCHING LINEAR MOTOR

(30) Priorité: 29.04.1999 FR 9905470
(43) Date de publication de la demande: 23.01.2002
(73) Titulaire: Somfy SAS, 74300 Cluses (FR)
(72) Inventeur: GREHANT, Bernard, F-74300 Nancy-sur-Cluses (FR)
(74) Mandataire: Bugnion Genève
(86) Numéro de dépôt international: PCT/IB2000/000546
(87) Numéro de publication internationale: WO 2000/067364

(56) Documents cités:
- US-A- 4 581 553
- US-A- 5 661 350
- PATENT ABSTRACTS OF JAPAN vol. 10, no. 332 (E-453), 12 novembre 1986 (1986-11-12) & JP 61 139262 A (MATSUSHITA ELECTRIC WORKS LTD), 26 juin 1986 (1986-06-26)
- PATENT ABSTRACTS OF JAPAN vol. 12, no. 393 (E-670), 19 octobre 1988 (1988-10-19) & JP 63 133862 A (YASKAWA ELECTRIC MFG CO LTD)

## Description

L'invention concerne un moteur linéaire tel que défini au préambule de la revendication 1.

La plupart des moteurs linéaires connus sont constitués d'un équipage mobile comportant plusieurs bobines se déplaçant en face d'une ou deux rangées d'aimants permanents portées par un rail. Un tel moteur est décrit par exemple dans la demande de brevet EP 0 161 677. Dans ce moteur, les aimants sont disposés, avec des pôles alternés, tout le long d'une des faces intérieures d'un profilé amagnétique, par exemple en aluminium, la succession des aimants définissant un pas de structure périodique. Dans sa forme la plus simple, l'équipage mobile est constitué de deux bobines munies de frotteurs pour leur alimentation en courant continu commuté par deux pistes disposées sur la face intérieure opposée du profilé. Les bobines sont décalées d'un quart de pas et alimentées en quadrature de phases. Selon un autre mode d'exécution, l'équipage mobile est constitué de trois bobines décalées d'un tiers de pas et alimentées par des courants déphasés de 120°.

Un autre exemple de réalisation est décrit dans la demande de brevet GB 2 233 835. Dans cette réalisation, l'équipage mobile, constitué de trois bobines, chevauche les aimants fixes disposés dans le plan de symétrie d'un profilé en U.

Ces structures nécessitent donc des aimants sur toute la longueur du parcours de l'équipage mobile, alors que seuls quelques uns d'entre eux sont actifs à un instant donné. Si l'on utilise des aimants permanents à haute performance, le coût d'une telle installation est important et devient d'autant plus inacceptable que la longueur de l'installation est importante. L'utilisation de ferrites permettrait de rendre ce coût non rédhibitoire, mais au prix de performances médiocres. De plus, la simple réduction de longueur par sciage du rail linéaire, dans le cas d'une nécessaire adaptation sur site, devient une opération complexe qui nécessite le démontage préalable des aimants et un nettoyage soigneux de l'ensemble du rail après opération. Un autre inconvénient apparaît lorsque le moteur travaille dans un environnement industriel : les particules métalliques que l'on rencontre dans un tel environnement sont attirées par les aimants et viennent perturber le bon fonctionnement du moteur.

Le moteur décrit dans le brevet EP 0 667 991 remédie à ces inconvénients. Le tube de guidage dans lequel se déplace l'équipage mobile ne comporte plus d'aimants, mais il est lui-même en matière ferromagnétique et il est découpé de manière à présenter des pôles statoriques disposés en deux rangées opposées, les pôles d'une rangée étant décalés linéairement relativement aux pôles de l'autre rangée. Chaque phase de l'équipage mobile comporte un enroulement inducteur entourant trois induits entre lesquels sont disposés deux aimants permanents de polarités opposées aimantés selon la direction de déplacement de l'équipage mobile. Les pôles statoriques et mobiles sont agencés de façon que dans une première de deux positions de conjonction des induits, deux premiers pôles mobiles appartenant chacun respectivement à l'un des induits coïncident avec deux pôles statoriques appartenant à deux rangées de pôles statoriques différentes, tandis que les deux autres pôles mobiles sont décalés par rapport aux pôles statoriques, alors que dans la deuxième des deux positions de conjonction, les deux autres pôles mobiles coïncident à leur tour avec des pôles statoriques, les deux premiers pôles mobiles étant à leur tour décalés par rapport aux pôles statoriques. Dans les positions de conjonction, la bobine est traversée par un flux magnétique provenant pour moitié de l'un des aimants et pour moitié de l'autre aimant.

Si un tel moteur présente l'avantage de ne pas comporter d'aimants fixes, la forme tubulaire du stator rend sa fabrication complexe au regard de la précision nécessaire pour réduire la valeur de l'entrefer. Par ailleurs, la liaison mécanique de l'équipage mobile à l'objet entraîné nécessite de fendre le tube statorique sur un des côtés, sur toute sa longueur, ce qui nuit à son efficacité magnétique. De plus, les efforts appliqués aux pièces polaires de l'induit sont dissymétriques, ce qui entraîne un ou plusieurs couples de torsion sur l'équipage mobile. Cet inconvénient oblige à rigidifier considérablement la structure et/ou à augmenter l'entrefer. On constate en outre que les fuites magnétiques existant entre l'équipage mobile et les côtés non découpés du tube statorique dégradent les performances du moteur. Enfin, le tube statorique s'oppose aux opérations de cintrage que nécessite la réalisation d'actionneurs directs, même dans le cas d'un rayon de courbure élevé.

La présente invention a pour but de remédier aux inconvénients susmentionnés, c'est-à-dire d'augmenter l'efficacité magnétique des pôles ferromagnétiques de l'élément de guidage, de réduire les fuites magnétiques et de permettre de réaliser des courbes par cintrage de l'élément de guidage.

Le moteur linéaire selon l'invention est caractérisé par les caractéristiques définies dans la partie caractérisante de la revendication 1.

L'utilisation dans l'élément de guidage de pôles ferromagnétiques magnétiquement indépendants permet de concevoir un élément de guidage plus facilement cintrable et/ou de garantir le positionnement des pôles dans un profilé non magnétique, et dont la précision d'obtention, par filière ou extrusion, est incomparablement supérieure à celle du pliage de tôles magnétiques selon l'art antérieur.

Les pôles de l'élément de guidage sont de préférence disposés par paire, de part et d'autre de l'axe du tube de guidage et la dimension des aimants permanents, mesurée selon leur axe magnétique, correspond à la distance séparant deux pôles statoriques opposées. Cette disposition a pour avantage de supprimer le couple de torsion sur l'équipage.

D'autres modes d'exécution de l'invention sont définis dans les revendications dépendantes 4 à 14. En particulier, il est possible de simplifier la structure en ne disposant les pôles ferromagnétiques que sur une seule face de l'élément de guidage.

Dans le cas où le tube de guidage est constitué d'un profilé en U, comme dans le cas des moteurs linéaires à aimants fixes, il est possible de relier mécaniquement un équipage mobile à un objet entraîné sans préjudice de performance. Les efforts sur l'équipage mobile sont parfaitement symétriques de sorte que l'on a pas de couple de torsion. Un guidage léger est par conséquent suffisant pour maintenir l'équipage mobile en position centrale dans le tube de guidage au cours de son mouvement. En outre, rien ne s'oppose à ce que les deux ou trois phases soient articulées soit par une rotule, soit simplement en exploitant la liaison entre les paires d'aimants alternées en contact direct, s'il s'agit de la variante 1. Un léger entrefer entre deux phases créé par un pion central permet une rotation de l'une des phases par rapport à l'autre. Dans ce cas, deux bobines d'induction voisines sont reliées par deux aimants de polarités opposées.

Dans tous les cas, la commutation du courant dans les bobines d'induction peut être assurée par une alimentation en courant alternatif ou en courant continu, comme décrit dans l'art antérieur, en particulier dans le brevet EP 0 667 991. La commutation peut être assurée par des pistes conductrices de forme adéquate, comme décrit dans le brevet EP 0 161 677 ou être assurée par un dispositif de commutation monté sur l'équipage mobile, comme décrit dans le brevet EP 0 667 991.

Le dessin annexé représente, à titre d'exemple, quelques modes d'exécution du moteur selon l'invention.

La figure 1 est une vue en perspective d'une section de tube statorique dans laquelle se déplace un équipage mobile dont on a représenté une seule phase, selon la variante 1.

La figure 2 est un éclaté de la figure 1.

La figure 3 est une vue en bout de la figure 1, selon l'axe du tube statorique.

Les figures 4A à 4D illustrent le principe de commutation du flux dans une phase.

La figure 5 représente schématiquement, pour un moteur triphasé dans lequel chaque phase est munie de deux aimants permanents distincts, une séquence dynamique de positions successives décalées de 1/6 de pas et la répartition correspondante du flux dans les trois phases.

La figure 6 est une vue représentative analogue pour un moteur triphasé dans lequel les phases ont un aimant permanent en commun.

La figure 7 est une vue de face, dans un plan parallèle à celui des plots statoriques, d'un équipage mobile selon un deuxième mode d'exécution

Les figures 8a à 8e représentent l'équipage mobile de la figure 7 et les plots statoriques, dans cinq positions successives de l'équipage mobile.

La figure 9a représente un mode d'exécution simplifié, avec une disposition des plots statoriques sur une seule face du tube statorique.

La figure 9b illustre l'effet miroir obtenu dans le mode d'exécution selon la figure 9a.

La figure 10 représente un mode de réalisation biphasé, selon la variante 2, vue de face dans un plan parallèle à celui des plots.

Les figures 11a à 11c représentent l'équipage mobile de la figure 10 et les plots statoriques, dans trois positions successives de l'équipage mobile.

La figure 12 représente une variante de la disposition des plots statoriques utilisés en figure 11.

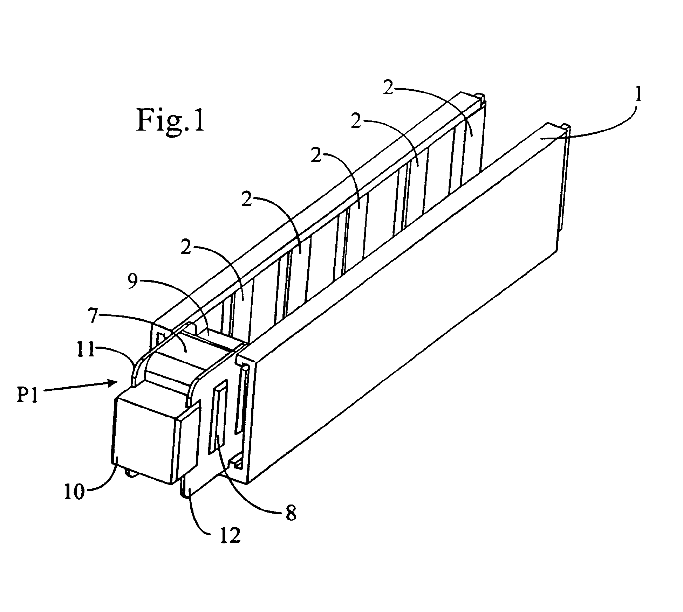

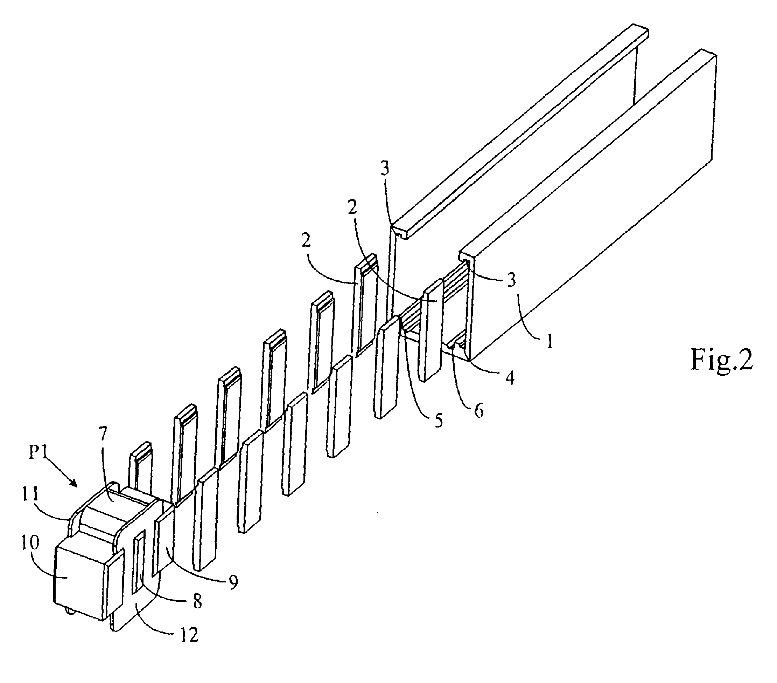

On se réfère aux figures 1 à 3.

Le moteur représenté comprend un tube statorique 1 constitué d'un profilé de guidage amagnétique en U de section rectangulaire, par exemple en aluminium. Il pourrait également être en matériau synthétique, car il ne sert que de support aux pôles statoriques constitués de plaquettes ou de plots rectangulaires 2 en matériau ferromagnétique, par exemple en acier doux. Ces plaquettes 2 sont retenues par engagement serré dans des paires de rainures opposées 3, 4 formées dans le profilé 1 de manière à être fixées contre les faces internes des deux ailes opposées parallèles du profilé en U. Les plaquettes 2 sont positionnées par paire, de telle sorte que les deux plaquettes d'une paire sont situées l'une en face de l'autre, symétriquement par rapport à l'axe du profilé 1. Les paires successives de plaquettes 2 sont équidistantes et espacées l'une de l'autre par une distance définissant le pas du moteur. Dans sa paroi transversale, le tube 1 présente en outre deux rainures supplémentaires 5 et 6 pour le guidage de l'équipage mobile, comme ceci sera décrit plus loin. Ces rainures 5 et 6 peuvent être revêtues d'un matériau facilitant le glissement de l'équipage mobile.

L'équipage mobile comprend deux ou trois phases, telle que la phase P1 représentée aux figures 1 à 3, chacune de ces phases étant constituée, en principe, d'une bobine 7 dont l'axe est perpendiculaire au plan des pôles statoriques 2, cette bobine entourant un noyau 8 en matériau magnétique constituant l'induit. De chaque côté de la bobine 7, selon l'axe du tube statorique 1, sont disposés deux aimants permanents 9 et 10 aimantés en sens opposés parallèlement à l'axe de la bobine. Aux deux extrémités de la bobine 7, sont fixées deux flasques rectangulaires 11 et 12 en matériau amagnétique, de préférence en matière synthétique, coopérant à la fixation des aimants permanents 9 et 10. Le noyau 8 et les aimants permanents 9 et 10 présentent sensiblement la même section carrée vue selon l'axe du tube statorique 1 et ils sont alignés selon cet axe. Vu de côté, le noyau 8 et les aimants 9 et 10 présentent une section rectangulaire de largeur pouvant varier selon les exécutions. Un équipage mobile biphasé et constitué de deux phases telles que P1 juxtaposées et un équipage mobile triphasé et constitué de trois phases telles que P1 juxtaposées.

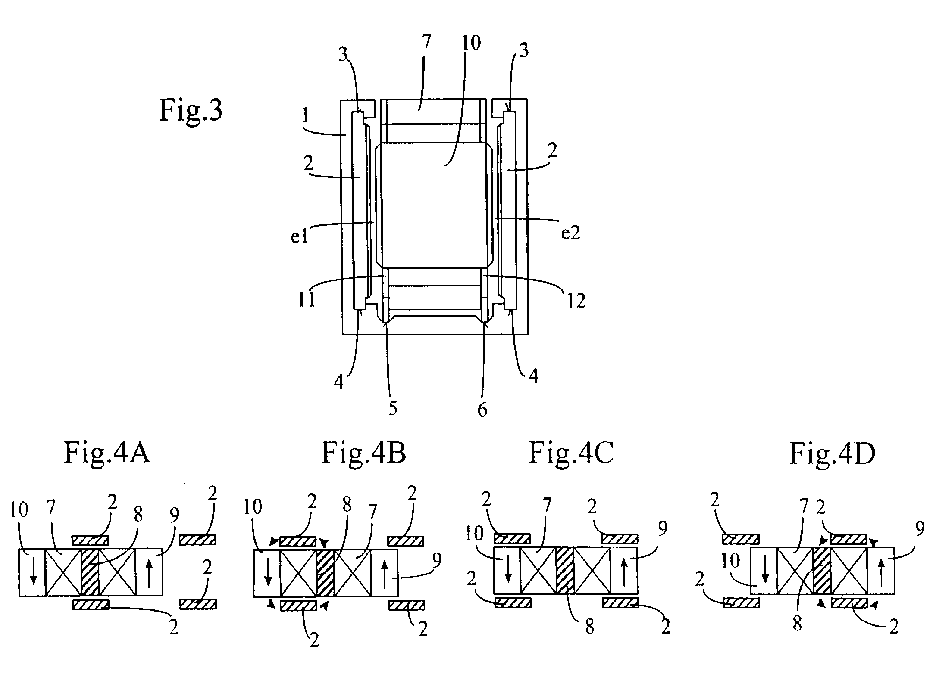

Comme ceci l'est visible à la figure 3, l'équipage mobile est guidé dans le tube 1 par ses deux flasques 11 et 12 glissant dans les rainures 5 et 6. La distance entre les aimants permanents 9 et 10 ou le noyau 8 et les pôles statoriques 2 définit deux entrefers e1 et e2.

Les figures 4A à 4D illustrent le principe du moteur selon l'invention, dans sa variante 1.

Dans la position représentée à la figure 4A, le noyau 8 est situé entre une paire de pôles statoriques 2, les paires voisines étant situées à des distances telles que les aimants permanents 9 et 10 ne sont pas engagés entre ces paires voisines. Les champs magnétiques des deux aimants permanents 9 et 10 ont tendance à se refermer à travers les pôles statoriques 2 voisins du noyau 8 et à travers ce noyau 8. Ces deux champs étant égaux et opposés, le flux magnétique dans le noyau 8 est nul.

Si l'on déplace l'équipage mobile vers la droite pour se trouver dans la position représentée à la figure 4B, on constate que dans cette position le flux principal dans le noyau 8 provient de l'aimant permanent 10 proche des pôles statoriques 2. Ce flux traverse la bobine 7 dans un premier sens indiqué par les petites flèches recourbées.

En continuant de déplacer l'équipage mobile vers la droite, on parvient à la position représentée à la figure 4C, dans laquelle la bobine 7 est située exactement à mi-distance entre deux paires de pôles statoriques 2, l'aimant permanent 9 se trouvant entre les deux pôles statoriques d'une paire et l'aimant 10 entre les pôles statoriques de la paire voisine. Dans cette position, le flux résultant dans la bobine est de nouveau nul.

En continuant de déplacer l'équipage mobile vers la droite on arrive dans une position représentée à la figure 4D, qui est la position symétrique de la position représentée à la figure 4B. Dans cette position le flux principal provient cette fois-ci de l'aimant 9 qui circule selon la direction indiquée par les petites flèches courbes. Ce flux traverse la bobine 7 par le noyau 8 dans un deuxième sens opposé à celui de la position représentée à la figure 4B.

Le déplacement de la bobine entre les pièces magnétiques 2 permet donc d'obtenir une force électromotrice alternative.

Le champ de l'aimant 9 à la figure 4B et celui de l'aimant 10 à la figure 4D produit un flux indésirable dans le noyau 8 qui constitue une perte magnétique. La distance entre les pôles de l'aimant 9 à la figure 4B et les extrémités du noyau 8 d'une part et les pièces polaires statoriques 2 par lesquelles passe le flux principal est toutefois relativement grande, de telle sorte que la perte est très faible, contrairement à ce qui se passe dans la structure selon le brevet EP 0 667 991. Le fait d'utiliser des plots biseautés sur les arêtes en vis-à-vis permet de limiter encore les pertes magnétiques.

La juxtaposition de deux ou trois équipages mobiles telle que représentée aux figures 1 à 3, et schématiquement, aux figures 4A à 4D, permet de réaliser un moteur biphasé, respectivement triphasé.

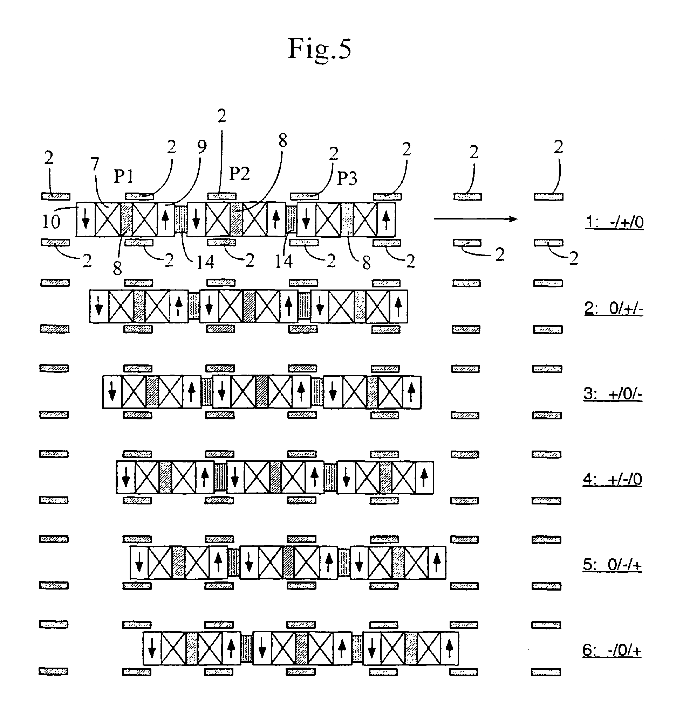

Un moteur triphasé est représenté schématiquement à la figure 5. Il est constitué de trois phases P1, P2 et P3 dont les axes des bobines sont respectivement décalés de 1/3 de pas et 2/3 de pas relativement au pas statorique défini par la distance entre deux paires de pôles statoriques successives. La distance entre les axes de deux bobines voisines est donc égale à 4/3 de pas. Dans le cas d'un moteur biphasé les axes de bobines seraient décalés respectivement de ¼ pas relativement au pas statorique. Il est bien entendu que ces décalages sont donnés à un nombre entier de pas près, et qu'il est possible d'y ajouter ou soustraire un demi-pas, par simple inversion du courant dans la bobine concernée.

La figure 5 représente une séquence dynamique des six positions décalées de 1/6 de pas et la répartition correspondante du flux dans les trois phases. Les signes +, -, o figurant à droite de chaque séquence indiquent la présence d'un flux dans le noyau de chaque phase et son sens, en absence de courant. Ainsi, par exemple, -/+/o signifie que dans la phase P1 il y a un flux "négatif" dirigé vers le bas, pour P2 un flux "positif" dirigé vers le haut et pour P3 un flux nul, et ainsi de suite.

Comme on le pratique dans toute machine à courant continu, on procède à l'inversion du courant dans une bobine au moment où la force électromotrice induite s'annule et change de sens, c'est à dire au moment où le flux dans cette bobine est maximum, dans l'un ou l'autre sens. Comme dans le brevet EP 0 667 991 chaque phase peut être équipée d'une paire de contacts frotteurs se déplaçant sur des pistes d'alimentation imprimées en cuivre sur un support isolant monté dans le fond du tube statorique 1, c'est-à-dire entre les rainures 5 et 6. Ces pistes sont alimentées en courant continu et la commutation peut être assurée par la forme en créneaux imbriqués des deux pistes, comme représenté et décrit dans le brevet EP 0 161 677. Il est également possible d'alimenter les bobines par deux rails conducteurs rectilignes continus et d'assurer la commutation au moyen d'un dispositif de commutation monté dans chacune des phases de l'équipage mobile, comme décrit dans le brevet EP 0 667 991 et comme ceci est connu de l'état de l'art. Des circuits électroniques spécialisés permettent aisément une telle commande, à partir de l'état de capteurs à effet Hall directement montées sur l'équipage mobile, par exemple le circuit intégré MC33033 de Motorola.

La structure du tube statorique permet sans autre d'effectuer des courbes par cintrage du tube 1. Dans l'équipage mobile, les trois phases du moteur représenté à la figure 5 peuvent être articulées entre elles de manière à faciliter la prise de courbe. Cette articulation 14 peut se faire par une rotule ou tout simplement en exploitant la liaison magnétique entre les paires d'aimants alternées en contact direct, en laissant un léger entrefer entre deux phases voisines, entrefer provoqué par un pion central permettant une rotation d'une phase par rapport à l'autre.

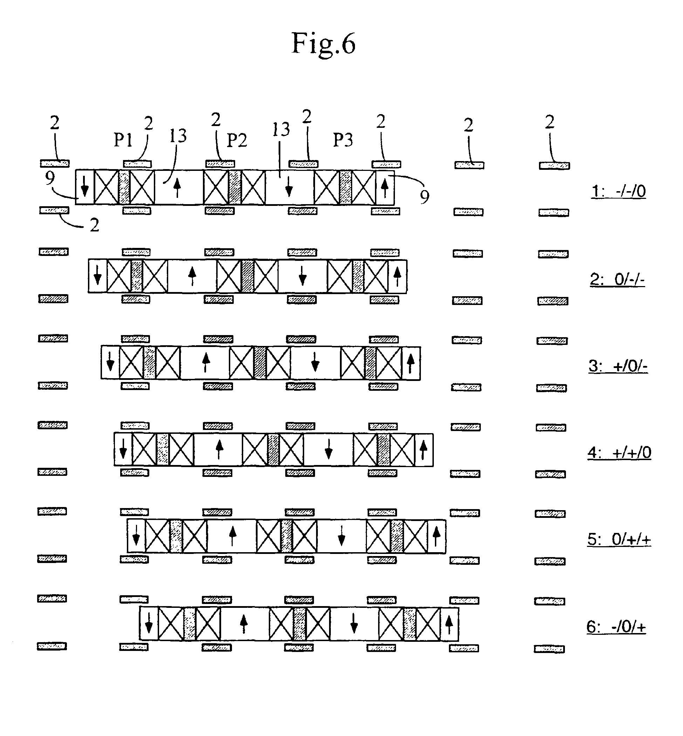

Si l'équipage mobile n'a pas besoin d'être articulé, il peut être simplifié comme représenté à la figure 6 qui représente une séquence de manière analogue à la figure 5. Dans ce mode d'exécution les aimants 9 et 10 reliant deux phases entre elles sont remplacés par un aimant commun 13 dont le sens d'aimantation est respectivement opposé au sens d'aimantation de l'aimant extérieur le plus proche, les polarités des aimants 13 étant par conséquent opposées entre elles, comme ceci apparaît à la figure 6. Pour retrouver un fonctionnement proche de celui du mode d'exécution représenté à la figure 5, il convient d'inverser les connexions de la bobine de la phase P2, comme ceci ressort de la répartition des flux indiquée pour chacune des positions de la séquence. Il est clair que cette disposition avec aimant commun évite un flux de fuite important entre aimants directement voisins polarisés en sens inverse.

Dans le mode d'exécution représenté aux figures 1 à 3 l'équipage mobile pourrait bien entendu être muni de galets roulant dans les rainures 5 et 6.

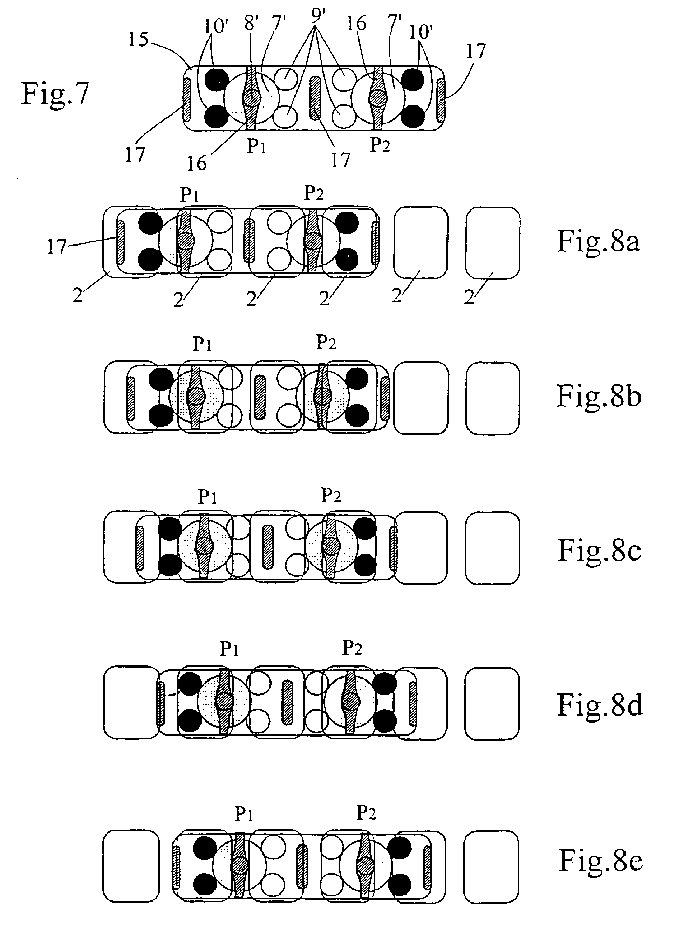

La réalisation pratique d'un moteur linéaire selon l'invention s'accompagne d'aménagements propres à en optimiser les performances. La figure 7 et les figures 8a à 8e montrent un dispositif avec équipage mobile diphasé, vu cette fois de face, dans un plan parallèle à celui des plots.

Pour des raisons de commodité, et d'utilisation de composants standards, les aimants 9' sont ici cylindriques, chacun des aimants rectangulaires précédents étant remplacé par une paire d'aimants, sertis dans un carter 15. Par convention, on dira qu'une face sombre correspond à un pôle Nord.

Les bobinages 7' sont également cylindriques, de même que leur noyaux 8', mais on dispose avantageusement de part et d'autre de chaque ensemble bobine-noyau un épanouissement polaire 16, allongé dans une direction perpendiculaire au mouvement. Celui-ci assure la double fonction de collecte du flux transmis par les plots 2, et de maintien mécanique de la bobine dans le carter 15.

Enfin, il est très avantageux de disposer, parallèlement à l'axe des aimants et des noyaux et avec la même longueur, des plaquettes magnétiques en acier doux 17, destinées à assurer la bonne circulation du flux des aimants qui ne sont pas dans une position de liaison avec un noyau de bobine à un instant donné. Comme aimants et bobines, ces plaquettes 17 traversent le carter 15 de part en part.

La figure 8a représente l'équipage mobile face à une rangée de plots statoriques 2, dans une position initiale. Pour être mieux vus, les plots 2 ont ici une hauteur exagérée : il suffit amplement qu'ils recouvrent les aimants, et toute hauteur superflue se traduit par une augmentation des fuites magnétiques de plot à plot.

Du fait des positions respectives de l'équipage mobile et des plots, on constate que la bobine de la phase P1 est, idéalement, complètement traversée par le flux des aimants Sud situés à sa droite, tandis que les aimants Nord situés à sa gauche voient leur flux se refermer par la plaquette 17 d'extrémité gauche. Au même instant, le flux dans la phase P2 est nul.

Un instant plus tard, en figure 8b, le flux dans P1 a diminué, tandis que le flux dans P2 augmente, issu des aimants Nord situés à sa droite.

A l'instant de la figure 8c, on est décalé magnétiquement d'un quart de pas par rapport à 8a : le flux est maintenant nul dans P1, alors qu'il est maximum dans P2. Et ainsi de suite : aussitôt après, le flux dans P1 provient majoritairement des aimants Nord situés à sa gauche.

On constate que cette disposition des éléments permet à la fois de recouvrir aimants et noyaux lors d'une conjonction, et d'éviter qu'une situation de flux quasi-nul ne dure trop longtemps.

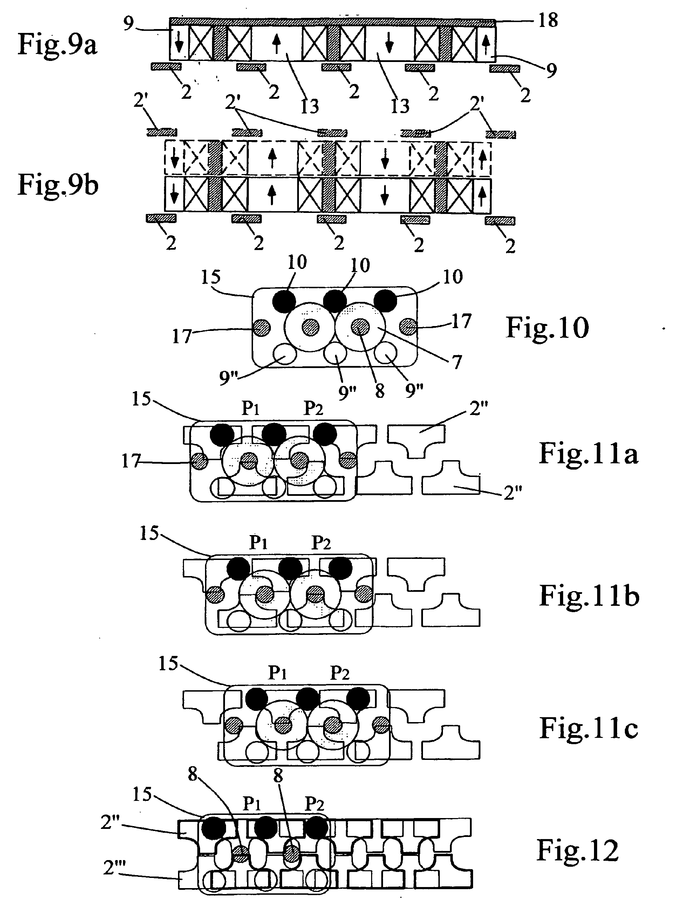

Enfin, toutes les formes de réalisation décrites dans le brevet s'accommodent d'une version simplifiée, représentée en figure 9a, à une seule rangée de plots statoriques 2, et une plaque 18 de fermeture du flux ou de court-circuit magnétique, solidaire de l'équipage mobile, du côté où les plots statoriques sont supprimés. Cette disposition présente l'avantage d'une plus grande simplicité de réalisation, notamment lors d'un cintrage. En contrepartie, il n'y a plus comme précédemment équilibrage des efforts, d'où besoin d'un guidage plus soigné, notamment à l'aide de roulettes. Au plan magnétique, un tel court-circuit magnétique 18 est connu pour jouer le rôle de miroir. Tout se passe comme s'il y avait toujours une double rangée de plots statoriques 2, mais avec une distance au moins double de la largeur de l'équipage mobile comme ceci est illustré à la figure 9b, où les plots images 2' sont représentés en trait discontinu.

La figure 10 représente maintenant un équipage mobile selon la deuxième variante de l'invention. Les aimants de même polarité sont disposés cette fois d'un même côté du plan défini par l'axe des bobines et l'axe du tube statorique. Si on prend pour orientations celles définies par la feuille, on dira que le flux magnétique qui en moyenne circulait précédemment horizontalement, provenant des aimants situés soit à gauche soit à droite de la bobine, circule maintenant en moyenne verticalement, provenant des aimants situés soit au dessus soit au dessous de la bobine. Comme précédemment, c'est la disposition des plots statoriques qui privilégie l'un ou l'autre sens de circulation du flux résultant dans le noyau.

Le principe de la variante 2 est suffisamment proche de celui de la variante 1 pour pouvoir être directement illustré sur une forme de réalisation biphasée, ici particulièrement compacte dans la direction du mouvement. Sur la figure 10, les deux bobines 7 sont séparées par trois quarts de pas statorique. On n'utilise pas d'épanouissement polaire sur les noyaux 8 des bobines. Deux éléments latéraux de fermeture de flux 17 sont utilisés, ici sous forme cylindrique.

Les figures 11a à 11c illustrent le fonctionnement de cette variante 2 en présence de plots statoriques 2". Ceux-ci ont une forme en T qui minimise les fuites de plot à plot, comme le ferait également une forme triangulaire, et sont de nouveau disposés par paire, symétriques de part et d'autre du plan parallèle aux plots et contenant l'axe du tube statorique. Il y a maintenant deux paires de plots statoriques 2" par pas : les plots sont orientés alternativement vers le haut et vers le bas tous les demi-pas.

Du fait des positions respectives de l'équipage mobile 15 et des plots statoriques 2", on constate sur la figure 11a que la bobine de la phase P1 est, idéalement, complètement traversée par le flux des aimants Sud situés au dessous, tandis que l'aimant Nord situé au dessus à gauche voit son flux se refermer partiellement par le cylindre auxiliaire 17 d'extrémité gauche. Au même instant, le flux dans la phase P2 est nul, à la fois par raison de symétrie et parce que le noyau de la bobine de P2 tend à devenir court circuit par les aimants qui se trouvent en haut à gauche et en bas à droite de P2.

Un quart de pas plus tard, en figure 11b, le flux dans P1 est devenu nul, tandis que le flux dans P2 est maximum, issu des aimants Sud situés au dessous.

A l'instant de la figure 11c, on est décalé d'un demi-pas par rapport à 11a : le flux est maintenant nul dans P2, alors qu'il est maximum dans P1, en provenant cette fois des aimants Nord situés au dessus. Et ainsi de suite.

On remarquera que la variante 2 permet le partage d'aimants communs entre phases consécutives. A la limite, les aimants haut et bas pourraient être deux aimants rectangulaires uniques placés au dessus et au dessous (dans le dessin) des bobines, c'est-à-dire de chaque côté des bobines si l'on se réfère à la direction de déplacement de l'équipage mobile.

De même, cette variante autorise en principe un raccordement de tous les plots statoriques supérieurs et de tous les plots statoriques inférieurs (dans le dessin) : on aurait alors, sur chacune des faces statoriques utilisées, deux pièces en forme de peignes imbriqués. Cette liaison des plots ne sera toutefois pas utilisée, du fait de l'accroissement considérable des fuites magnétiques qu'elle engendre.

Enfin, il est possible d'appliquer à la variante 2 les aménagements relatifs à la variante 1, et notamment l'usage d'un court-circuit magnétique sur une face de l'équipage mobile pour n'utiliser qu'une seule face du profilé statorique.

La figure 12 illustre enfin une des innombrables formes de réalisation inspirées de l'invention. Il s'agit d'une variante du cas précédent, mais cette fois les plots statoriques 2" et 2''' d'une même paire sont symétriques par rapport à l'axe du tube statorique. On a représenté en trait gras les plots 2" appartenant à la même face du tube statorique, et en trait fin les plots 2''' appartenant à la face opposée. Pour faciliter la vue, les bobines ne sont représentées que par leur noyau 8. La phase P1 est dans une position de flux maximum. On remarque que le flux d'une paire d'aimants traverse le noyau puis la paire d'aimants de polarité opposée, cette fois en série avec la précédente, avant de se refermer ici dans l'air, ce qui lui donnera une faible valeur. Un mode de réalisation triphasée permet au flux de se refermer à travers le noyau des deux autres bobines. Mais l'allongement des lignes de flux selon un tel circuit magnétique nuit à la valeur de flux obtenue.

La variante 1 permet aussi une mise en série des aimants de polarité alternée, en utilisant par exemple des plots en diagonale, de direction opposée sur les deux faces du tube statorique. Mais là encore, les flux obtenus sont trop faibles pour justifier l'usage de cette disposition.

Il est clair que toute variante des formes de réalisation présentées ici est couverte par l'invention, comme par exemple l'utilisation d'une seule face statorique sans qu'il y ait court-circuit magnétique sur l'équipage mobile, ou encore l'utilisation d'éléments en acier doux en substitution partielle des aimants, ou encore la réalisation d'un équivalent des deux aimants haut et bas de la variante 2 par un seul aimant, perpendiculaire à l'axe des bobines et à l'axe du tube statorique, associé à des pièces polaires.

## Revendications

1. Moteur linéaire à au moins deux phases (P1, P2, P3) à commutation de flux constitué d'un équipage mobile comprenant au moins deux bobines d'induction (7) entourant chacune un induit magnétique (8) définissant des pôles magnétiques mobiles et deux aimants permanents (9, 10) aimantés en sens opposé, d'un tube statorique de guidage (1) présentant des pales magnétiques (2) disposés le long du tube statorique, sur au moins une paroi du tube statorique de manière à venir successivement en face des pôles magnétiques mobiles lors du déplacement de l'équipage mobile, et de moyens de commutation du sens du courant dans les bobines, **caractérisé en ce que** les aimants permanents (9, 10) sont disposés à l'extérieur des bobines, et qu'ils sont aimantés selon un axe parallèle à l'axe de la bobine, et **en ce que** les pôles magnétiques statoriques (2) sont constitués de pièces en matériau magnétique fixées dans un tube de guidage en matériau amagnétique, la dimension des aimants mesurée selon leur axe magnétique étant choisie de manière à créer des entrefers étroits au passage des aimants devant les pôles statoriques.

2. Moteur selon la revendication 1, **caractérisé en ce que** les pièces polaires (2) constituant les pôles statoriques sont fixées par paire, de part et d'autre de l'axe du tube de guidage(1), sur deux parois opposées du tube statorique et que la dimension des aimants (9, 10) correspond à la distance séparant deux pièces polaires statoriques opposées.

3. Moteur selon la revendication 2, **caractérisé en ce que** les aimants de polarité opposée relatifs à une phase sont disposés symétriquement par rapport au plan contenant l'axe de la bobine et une perpendiculaire à l'axe du tube statorique, c'eat à dire disposés en avant et en arrière de la bobine dans la direction du mouvement.

4. Moteur selon la revendication 2, **caractérisé en ce que** les aimants de polarité opposée relatifs à une phase sont disposés symétriquement par rapport au plan contenant l'axe de la bobine et l'axe du tube statorique.

5. Moteur selon l'une des revendications 2 à 4, **caractérisé en ce que** le tube de guidage (1) est constitué d'un profilé en U rectangulaire sur deux parois internes opposées duquel sont fixés des plots ou plaquettes (2) en matériau magnétique constituant les pôles statoriques.

6. Moteur biphasé à deux bobines selon l'une des revendications 1 à 5, **caractérisé en ce que** les axes des bobines sont décalés de un quart ou trois quarts de pas relativement au pas statorique défini par la distance entre les positions de deux pièces polaires statoriques consécutives.

7. Moteur triphasé à trois bobines selon l'une des revendications 1 à 5, **caractérisé en ce que** les axes des bobines sont décalés de un tiers ou deux tiers de pas relativement au pas statorique défini par la distance entre les positions de deux pièces polaires statoriques consécutives.

8. Moteur selon l'une des revendications 2 à 5, **caractérisé en ce que** les sous-ensembles constituant chacune des phases sont articulés (14) entre eux.

9. Moteur selon l'une des revendications 1 à 7, **caractérisé en ce que** deux phases consécutives partagent un aimant commun.

10. Moteur selon l'une des revendications 1 à 9, **caractérisé en ce que** l'équipage mobile est alimenté en courant continu et que les moyens de commutation du courant sont montés sur l'équipage mobile.

11. Moteur selon l'une des revendications 1 à 10, **caractérisé en ce que** l'équipage mobile contient, parallèlement à l'axe des bobines, des traversées (17) en matériau ferromagnétique doux.

12. Moteur selon la revendication 1, **caractérisé en ce que** l'équipage mobile comprend une plaque de court-circuit magnétique en matériau ferromagnétique doux (18) disposée sur la face de l'équipage mobile parallèle et opposée aux pôles statoriques (2) de manière à créer une image (2') des pôles statoriques.

## Claims

1. A flux-switching linear motor with at least two phases (P1, P2, P3) made up of a moving element, comprising at least two induction coils (7) each surrounding a magnetic armature (8) defining moving magnetic poles, and two permanent magnets (9, 10) magnetized in opposite directions, of a guidance stator tube (1), the stator tube having magnetic poles (2) disposed along the stator tube, at least along one wall of the stator tube, so as to be successively facing the moving magnetic poles during the travel of the moving element, and of means for switching direction of the current in the coils, **characterized in that** the permanent magnets (9, 10) are disposed outside the coils and magnetized along an axis parallel to the axis of the coil, and **in that** the stator magnetic poles (2) are made up of pieces made of magnetic material fixed in a guidance tube made of a non-magnetic material, the dimension of the magnets as measured along their magnetic axis being chosen so as to create narrow gaps when the magnets are passing in front of the stator poles.

2. Motor according to claim 1, **characterized in that** the polar pieces (2) composing the stator poles are fixes by pairs, on both sides of the axes of the guidance tube (1), on two opposite walls of the stator tube and **in that** the size of the magnets (9, 10) fits to the distance separating two opposite stator polar pieces.

3. Motor according to claim 2, **characterized in that** the magnets of opposite polarity which relate to a phase are disposed symmetrically with respect to the plane containing the coil axis and a perpendicular line to the axis of the stator tube, this means disposed in front and behind the coil in direction of the movement.

4. Motor according to claim 2, **characterized in that** the magnets of opposite polarity which relate to a phase are disposed symmetrically with respect to the plane containing the axis of the coil and the axis of the stator tube.

5. Motor according to one of the claims 2 to 4, **characterized in that** the guidance tube (1) is made of a rectangular U-profile member on two opposite internal walls of which are fixed lugs or pads (2) made of magnetic material which constitute the stator poles.

6. Two-phase motor with two coils according to one of the claims 1 to 5, **characterized in that** the axes of the coils are offset by a quarter or three quarters of a spacing relative to the stator spacing defined by the distance between the positions of two consecutive stator pole pieces.

7. Three-phase motor with three coils according to one of the claims 1 to 5, **characterized in that** the axes of the coils are offset by a third or two thirds of a spacing relative to the stator spacing defined by the distance between the positions of two consecutive stator pole pieces.

8. Motor according to one of the claims 2 to 5, **characterized in that** the subassemblies which constitute each of the phases are articulated (14) together.

9. Motor according to one of the claims 1 to 7, **characterized in that** two consecutive phases share a common magnet.

10. Motor according to one of the claims 1 to 9, **characterized in that** the moving element is supplied with DC current and that the means for switching the current are mounted on the moving element.

11. Motor according to one of the claims 1 to 10, **characterized in that** the moving element contains, parallel to the axis of the coils, feedthroughs (17) made of soft ferromagnetic material.

12. Motor according to claim 1, **characterized in that** the moving element comprises a magnetic short-circuit plate made of a soft ferromagnetic material (18) disposed on the face of the moving element parallel and opposite to the stator poles (2) in such a way as to create an image (2') of the stator poles.

## Patentansprüche

1. Linearmotor mit wenigstens zwei Phasen (P1, P2, P3) und mit Flusskommutation, bestehend aus einem beweglichen Teil mit wenigstens zwei Induktionsspulen (7), die jede einen magnetischen Anker (8) umgeben, der bewegliche Magnetpole bildet, und mit zwei im entgegengesetzten Sinne magnetisierten Dauermagneten (9, 10), aus einem den Ständer bildenden Führungsrohr (1) mit Magnetpolen (2), die längs dieses Ständerrohrs auf wenigstens einer Wand desselben so angeordnet sind, dass sie bei der Verschiebung des beweglichen Teils aufeinanderfolgend vor die beweglichen Magnetpole gelangen, sowie aus Mitteln zur Kommutation der Stromrichtung in den Spulen, **dadurch gekennzeichnet, dass** die Dauermagnete (9, 10) ausserhalb der Spulen angeordnet und längs einer parallel zur Spulenachse liegenden Achse magnetisiert sind und dass die Magnetpole (2) des Ständers aus Stücken aus magnetischem Material bestehen, welche in einem Führungsrohr aus unmagnetischem Material befestigt sind, wobei die längs ihre magnetischen Achse gemessene Abmessung der Magnete so gewählt ist, dass beim Vorbeigang der Magnete vor den Ständerpolen enge Luftspalte gebildet werden.

2. Motor nach Anspruch 1, **dadurch gekennzeichnet, dass** die die Ständerpole bildenden Polstücke (2) paarweise beiderseits der Achse des Führungsrohrs (1) an zwei gegenüberliegenden Wänden dieses Führungsrohrs befestigt sind und dass die Abmessung der Magnete (9, 10) dem Abstand zwischen zwei gegenüberliegenden Ständerpolstücken entspricht.

3. Motor nach Anspruch 2, **dadurch gekennzeichnet, dass** die zu einer Phase gehörenden Magnete entgegengesetzter Polarität symmetrisch in bezug auf die die Spulenachse enthaltende Ebene und eine zur Achse des Ständerrohrs Senkrechte angeordnet sind, das heisst in Bewegungsrichtung gesehen vor und hinter der Spule.

4. Motor nach Anspruch 2, **dadurch gekennzeichnet, dass** die zu einer Phase gehörenden Magnete entgegengesetzter Polarität symmetrisch in bezug auf die die Spulenachse und die Achse des Ständerohrs enthaltende Ebene angeordnet sind.

5. Motor nach einem der Ansprüche 2 bis 4, **dadurch gekennzeichnet, dass** das Führungsrohr (1) aus einem rechteckigen U-Profil besteht, bei welchem an zwei gegenüberliegenden Innenwänden Klötze oder Plättchen aus magnetischen Material befestigt sind, welche die Ständerpole bilden.

6. Zweiphasenmotor mit zwei Spulen nach einem der Ansprüche 1 bis 5, **dadurch gekennzeichnet, dass** die Achsen der Spulen um ein Viertel oder drei Viertel der Teilung relativ zur Ständerteilung, definiert durch den Abstand zwischen den Positionen zweier aufeinanderfolgender Ständerpolstücke, versetzt sind.

7. Dreiphasenmotor mit drei Spulen nach einem der Ansprüche 1 bis 5, **dadurch gekennzeichnet, dass** die Achsen der Spulen um ein Drittel oder zwei Drittel der Teilung relativ zu der durch den Abstand zwischen den Positionen zweier aufeinanderfolgender Ständerpolstücke definierten Ständerteilung versetzt sind.

8. Motor nach einem der Ansprüche 2 bis 5, **dadurch gekennzeichnet, dass** die jede der Phasen bildenden Untergruppen miteinander gelenkig angeordnet sind.

9. Motor nach einem der Ansprüche 1 bis 7, **dadurch gekennzeichnet, dass** sich zwei aufeinanderfolgende Phasen einen gemeinsamen Magneten teilen.

10. Motor nach einem der Ansprüche 1 bis 9, **dadurch gekennzeichnet, dass** der bewegliche Teil mit Gleichstrom gespeist wird und dass die Mittel zur Kommutation des Stroms auf dem beweglichen Teil montiert sind.

11. Motor nach einem der Ansprüche 1 bis 10, **dadurch gekennzeichnet, dass** der bewegliche Teil parallel zur Achse der Spulen liegende Querstege aus weich-ferromagnetischem Material enthält.

12. Motor nach Anspruch 1, **dadurch gekennzeichnet, dass** der bewegliche Teil eine magnetische Kurzschlussplatte aus weich-ferromagnetischem Material (18) aufweist, die auf der parallel und entgegengesetzt zu den Ständerpolen (2) liegenden Seite des beweglichen Teils angeordnet ist, so dass ein Bild (2') der Ständerpole gebildet wird.
